# EUROPEAN PATENT SPECIFICATION

(11) **EP 3 096 089 B1**
(45) Date of publication and mention of the grant of the patent: **07.03.2018**
(21) Application number: 16163701.2
(22) Date of filing: 04.04.2016
(51) Int. Cl.: F24F 5/00, F24F 11/08, F24F 12/00, F24F 3/147, F24D 5/02, F24D 17/02, F24D 17/00, F24D 19/10, F24D 5/04

(54) **SYSTEM FOR CONTROLLING THE ENERGY BALANCE OF A PROPERTY**
SYSTEM ZUR STEUERUNG DER ENERGIEBILANZ EINES EIGENTUMS
SYSTÈME PERMETTANT DE COMMANDER LE BILAN ÉNERGÉTIQUE D'UNE PROPRIÉTÉ

(30) Priority: 07.04.2015 FI 20155244
(43) Date of publication of application: 23.11.2016
(73) Proprietor: Ensto Enervent Oy Ab, 06150 Porvoo (FI)
(72) Inventor: Carlsson, Ralf, 06150 Porvoo (FI)
(74) Representative: Papula Oy

(56) References cited:
- EP-A1- 2 306 107
- EP-A1- 2 620 715
- WO-A1-2009/000974
- WO-A2-2006/066953

## Description

### FIELD OF THE INVENTION

The invention relates to a system for controlling the energy balance of a property with the purpose of controlling and optimizing the thermal energy flows that are inevitably created at a property, produced in purpose at a property or in connection with a property, and needed for the property.

### BACKGROUND OF THE INVENTION

A property in this application refers to a residential property, commercial property, office property, industrial property, storage property or their different combinations. Of the energy used at properties, almost all will evidentially transform into heat, irrespective of whether it is introduced into the property as heat, electricity, gas etc. and what it is actually used for. Thus, the temperature at a property is usually too low or too high, and it must be adjusted some way.

In most properties, different activities such as living, industrial production, generally the presence of people inside, refrigerating machines etc. produce great deals of heat. Heat production at a property and the need of heat at different times of the day, week or even year are hardly ever balanced, whereby heating and cooling is needed. In heating, different energy sources are used, and in cooling, excess heat is usually blown out. However, if observed even over a time period of one day, usually at nearly every property more heat is produced than what the envelope leaks, also during cold seasons.

Prior art in the field of the invention has been disclosed in patent publication FR2979418, in which the heating and cooling of a building are centrally regulated by means of ventilation. However, the system does not form a jointly effectively functioning assembly, but the energy flows are someway controlled by means of separately functioning components combined together. For example, the system does not function at temperatures below 0°C, but the employed cross-flow cell will freeze and requires warm outblow air. Furthermore, an essential part of the system is electric post-heating by which the actual temperature regulation is conducted. Thus, the system is practically an energy-wasting supply air machine using direct electric heating.

Document WO2006/066953A2 discloses a system for recovering heat from circulating air and producing a controlled supply air flow and hot water according to the preamble of claim 1. However, the system is not very effective because of the location of the heat exchangers.

### OBJECTIVE OF THE INVENTION

The objective of the invention is to remedy the defects of the prior art mentioned above. Specifically, the objective of the invention is to disclose a new system for controlling the energy balance, by means of which the amount of additional energy that is needed at a property is minimized by optimally directing and adjusting the use, production and transfer of the energy created due to the normal use of the property. Another objective of the invention is to disclose a system that functions energy-efficiently when a space is being heated as well as cooled in both warm and cold conditions, i.e. also below 0°C.

### SUMMARY OF THE INVENTION

The system for controlling the energy balance of a property according to the invention as defined in claim 1 comprises an exhaust air duct for conveying exhaust air coming from the property to the control system, an outflow duct for the exhaust air to be conveyed out from the control system, usually into the open air, an inflow duct for fresh new air to be introduced into the control system from outside, and a supply air duct for new replacement air conveyed to the property from the control system. In addition, the control system comprises a liquid-filled heat storage tank. Usually, a water storage tank can be used, but other liquids are also possible. According to the invention, the system comprises a compressor and a compressor circuit connectable to the heat storage tank, the compressor circuit including a first heat exchanger disposed between the exhaust air duct and the outflow duct and a second heat exchanger disposed between the inflow duct and the supply air duct whereby, by means of the compressor, the respective air flows can be cooled, individually and independently of one another, in order to recover the excess heat obtained into the heat storage tank. In addition, a heat transfer device is disposed in the exhaust air flow downstream of the heat exchanger and in the supply air flow upstream of the heat exchanger for transferring heat efficiently and economically to the supply air flow from the exhaust air flow. Thus, even a small temperature difference between the exhaust air flow and the supply air flow can be utilized. The supply air duct further comprises an additional heater downstream of the compressor for providing the air flow to the property at a specific target temperature.

Preferably, the heat transfer device used is a rotary heat transfer device in which the rotary and heat-storing discs of the rotor of the heat transfer device are alternately provided in the exhaust flow to heat them and in the supply flow to cool them. A rotary heat transfer device, due to its efficiency and simple structure, is preferred for all uses where it is allowed. However, in residential spaces more impervious structures must be used, whereby for example heat transfer devices based on a circulating fluid, such as glycol, can be used.

In one embodiment of the invention, a circulation air regulator is provided in the system for opening the exhaust air duct directly to the supply air duct and circulating the air at the property so as to bypass the compressor and the heat exchanger. For example under circumstances where no one is present at a residential property or a commercial property, there is no need to supply new air that is rich in oxygen. Then it is possible just to circulate the property's indoor air and keep it unchanged, and thus be prepared to promptly react to necessary changes.

In a preferred embodiment, the circulation air regulator is connected with a CO₂ sensor disposed in the circulating air flow and arranged to control the circulation air regulator. Thus, when an increase of the carbon dioxide content in the indoor air is detected, which is usually due to people entering the space, the circulation air regulator can be either entirely closed or partly opened, so that the circulating air is at least partly supplied with new and oxygen-rich air to replace the carbon dioxide containing air to be removed.

In one preferred embodiment, the additional heater disposed in the supply air duct downstream of the second heat exchanger is in heat transfer communication with the heat storage tank, whereby heating of the air blown to the property up to a target temperature is in fact carried out by drawing the necessary heat from the heat storage tank. In the additional heater it is also possible to use an electrical resistor to ensure sufficient supply of heat under all circumstances. Instead of an electrical resistor, a heat pump can also be used, whereby a heat storage tank, outdoor air or ground may act as the heat source.

The additional heater enables energy-efficient dehumidification of the air being drawn in to the property in hot and humid seasons. For this purpose, the humid and warm inflow air drawn from outside is cooled by means of the heat exchangers within the compressor circuit, and the heat is recovered into the heat storage tank. At the same time, humidity in the air condenses and is separated from the air flow. Heat is then drawn back to the air flow from the heat storage tank at the additional heater, whereby dehumidified air is obtained at a target temperature for being conveyed in to the property.

In one embodiment of the invention, air filters are provided in connection with the exhaust air duct and the inflow duct for purifying the air flows before flowing to the control system. Thus, the dust, pollen and the like coming from outside as well as dust from indoors can be separated and kept out of the heat-transfer surfaces of the system.

In addition, the system comprises preferably on both sides, i.e. in connection with the outflow duct and the supply air duct, blowers by means of which suitable air flows are created.

The heat storage tank of the system preferably comprises at least one partition wall which is horizontal and partly open or which partially divides the heat storage tank into sections in the vertical direction. Their purpose is not to prevent the vertical flows in the heat storage tank but to restrain them so as to obtain greater temperature differences in the heat storage tank between its upper end and lower end. In a preferred embodiment, an electrical resistor is provided in the heat storage tank for maintaining the temperature therein above a predetermined temperature. This minimum temperature is usually of the order of 55°C, so that the occurrence of Legionella bacteria can be prevented.

### ADVANTAGES PROVIDED BY THE INVENTION

The system for controlling the energy balance of a property according to the invention has notable advantages over the prior art. By means of the system, it is possible to specifically control and direct the energy flows at a property, both momentarily and over a longer period of time. The heat energy flowing out in ventilation can be recovered and used immediately to heat the inflowing air with the system. On the other hand, excess heat can also be recovered and stored for later needs. As the need for energy and the quantity by which the heat energy is released vary greatly at different properties during different times of the day and week, by means of the system according to the invention it is possible to balance the energy flows at the property so as to obtain even all of the energy needed for heating from the recovered waste heat, which is conveyed for use at a proper time. The invention is particularly suited for properties including at least two of the following: residential spaces, commercial spaces, office spaces and industrial spaces. As different activities requiring different operating temperatures are performed at the same property at different times, it is possible to continuously and efficiently transfer and recover heat energy between the heat storage tank and different operating spaces.

### BRIEF DESCRIPTION OF THE DRAWINGS

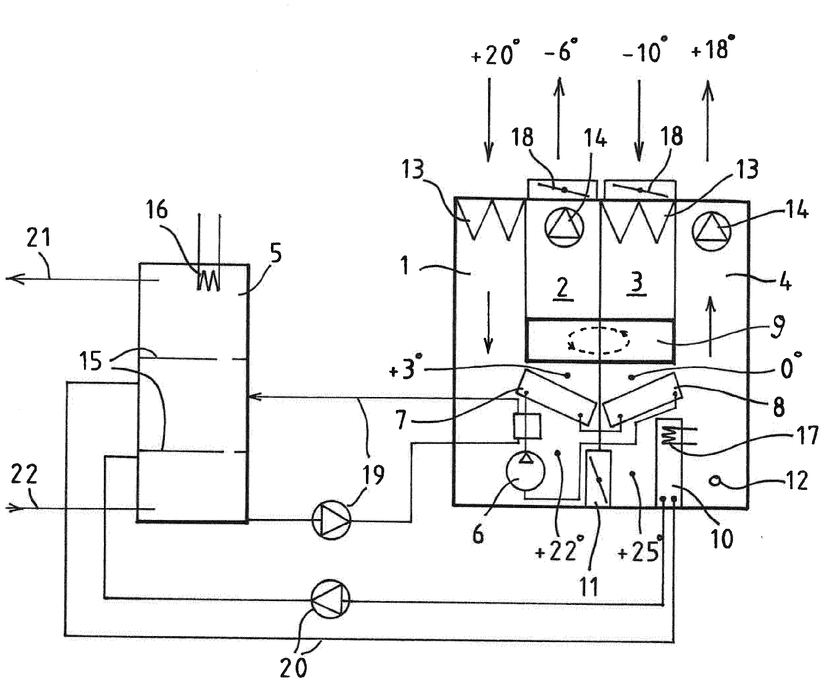

The invention will now be described in detail with reference to the accompanying drawing, which is a schematic diagram illustrating one system for controlling the energy balance according to the invention.

### DETAILED DESCRIPTION OF THE INVENTION

The figure shows a schematic diagram illustrating the system for controlling the energy balance of a property according to the invention. The system comprises an exhaust air duct 1 through which exhaust air flows from the property to the system. From the system, the air then flows out through an outflow duct 2. New replacement air is correspondingly drawn to the system through an inflow duct 3, and it is conveyed through a supply air duct 4 into the property. Blowers 14 are provided at the ends of ducts 2 and 4 for circulating the air in the system. Closure plates 18 are provided at the ends of ducts 2 and 3 that open to the outside for closing the ducts when they are not used. In addition, air filters 13 are provided at ducts 1 and 3 for preventing impurities entrained in the air from flowing into the system.

The basic objective of the system according to the invention is to recover and circulate heat as efficiently as possible. To this end, the outflow duct 2 and the inflow duct 3 are connected by means of a mechanical, i.e. rotary, heat transfer device 9. Thus, as the outflowing warm air heats the vanes of the heat transfer device, the heat moves, very efficiently and with low cost, with the vanes as they turn to the colder air that flows inwards in the inflow duct.

Before the heat transfer device 9, the air flow coming from the exhaust air duct 1 has moved through a first heat exchanger 7 disposed in a compressor circuit 6, where the temperature of the air is lowered to a considerable degree. From the compressor circuit, heat is transferred to a heat storage tank 5 through a water circulation circuit 19. The compressor circuit 6 also comprises a second heat exchanger 8 which is disposed in the air flow that moves from the inflow duct 3 to the supply air duct 4. This air flow can also be cooled so as to recover heat into the heat storage tank 5 when it is too warm to be conveyed directly to the property.

In addition, the system comprises in the supply air duct 4 an additional heater 10 downstream of the second heat exchanger 8, which is connected in a same water circulation circuit 20 as the heat storage tank 5. Thus, heat can be drawn from the heat storage tank so as to heat the air flow that flows through the additional heater 10 up to a target temperature before it is conveyed through the supply air duct 4 to the property. The additional heater 10 is suitably also provided with an electrical resistor 17 for additional heating of the air, if heat from the heat storage tank is not sufficient for any reason.

The system also functions very well in hot and humid circumstances so as to dry and cool the air, whereby the incoming hot and humid air in the inflow duct 3 is cooled very cold at the second heat exchanger 8 so as to recover its heat into the heat storage tank at the compressor circuit 6. Thus, as the air cools, its humidity condenses, and the cold and dry air is conveyed through the additional heater 10 where the heat that was drawn out from it during cooling is conveyed back to it. This way, dry and cool indoor air is obtained from hot and humid outdoor air while storing the excess heat energy in the heat storage tank.

Usually, the heat transfer device 9 is only used in the cold season so as to recover heat from the outflowing air into the inflowing replacement air. At other times, the heat transfer device 9 can be kept stopped.

In addition, the system comprises a circulation air regulator that connects the exhaust air duct 1 and the supply air duct 4 directly to each other so as to enable the air of the property to be circulated without new replacement air. Thus, in spaces with no people or operations it is possible just to maintain, by means of the additional heater 10, a target temperature level without introducing new replacement air. In connection with this function, it is appropriate to use a CO₂ sensor 12, by means of which the carbon dioxide content of the recirculated air is measured on a continuous basis. Thus, if people or other oxygen consuming activity appears in the space, the system may instantly react and draw at least part of the air conveyed into the property from outside, or then close the circulation air regulator 11 altogether so as to draw all air from outside through duct 3.

A hot water outlet 21 is provided in the heat storage tank 5 at its upper end, and a cold replacement water supply 22 is provided at its lower part. An electrical resistor 16 is also disposed at the upper part for ensuring sufficient temperature for water in all conditions, and for also ensuring that the Legionella bacteria are not able to grow in the tank. The heat storage tank is provided with two horizontal partition walls 15, by which the vertical flows are restrained in the tank. Thus, the vertical temperature differences can be maintained in the heat storage tank, and separate flows into and out of the tank can in each case be arranged to an optimal level of the tank.

The invention has been described above by way of example with reference to the accompanying drawing, without in any way limiting the invention exclusively to the structures described herein. Different embodiments of the invention are possible within the scope defined by the claims.

## Claims

1. A system for controlling the energy balance of a property, comprising an exhaust air duct (1) from the property to the control system, an outflow duct (2) from the control system, an inflow duct (3) to the control system, a supply air duct (4) from the control system to the property, and a heat storage tank (5) filled with liquid, wherein the control system comprises a compressor (6) with a compressor circuit connectable to the heat storage tank, the compressor circuit including a first heat exchanger (7) disposed between the exhaust air duct (1) and the outflow duct (2) and a second heat exchanger (8) disposed between the inflow duct (3) and the supply air duct (4), and a heat transfer device (9) in the exhaust air flow for transferring heat to the supply air flow from the exhaust air flow, **characterised in that**
the heat transfer device (9) in the exhaust air flow is disposed downstream of heat exchanger (7) and in the supply air flow upstream of heat exchanger (8),
an additional heater (10) is disposed in the supply air duct (4) downstream of the second heat exchanger (8) of the compressor circuit for adjusting the temperature of the supply air flow to be conveyed to the property.

2. The system for controlling the energy balance according to claim 1, **characterized in that** the heat transfer device (9) is a rotary heat transfer device.

3. The system for controlling the energy balance according to claim 1, **characterized in that** the heat transfer device (9) is a heat transfer device that uses liquid, such as glycol, as a heat transfer medium.

4. The system for controlling the energy balance according to any one of claims 1-3, **characterized in that** the system comprises a circulation air regulator (11) for opening the exhaust air duct (1) directly to the supply air duct (4) and circulating the air at the property so as to bypass the compressor (6) and the heat exchangers (7,8).

5. The system for controlling the energy balance according to claim 4, **characterized in that** the circulation air regulator (11) is connected with a CO₂ sensor (12) disposed in the circulating air flow and arranged to control the circulation air regulator.

6. The system for controlling the energy balance according to any one of claims 1-5, **characterized in that** the additional heater (10) is in heat transfer communication with the heat storage tank (5) for drawing additional heat needed for the air flow from the heat storage tank.

7. The system for controlling the energy balance according to claim 6, **characterized in that** an electrical resistor (17) is provided in the additional heater.

8. The system for controlling the energy balance according to any one of claims 1-7, **characterized in that** air filters (13) are provided in connection with the exhaust air duct (1) and the inflow duct (3) for purifying the air flows before flowing to the control system.

9. The system for controlling the energy balance according to any one of claims 1-8, **characterized in that** blowers (14) are provided in connection with the outflow duct (2) and the supply air duct (4) for creating the air flows.

10. The system for controlling the energy balance according to any one of claims 1-9, **characterized in that** the heat storage tank (5) comprises at least one partition wall (15) which is horizontal and partly open for restraining the vertical flows in the heat storage tank.

11. The system for controlling the energy balance according to any one of claims 1-10, **characterized in that** an electrical resistor (16) is provided in the heat storage tank (5) for keeping its temperature above a predetermined temperature.

12. The system for controlling the energy balance according to any one of claims 1-11, **characterized in that** the system is used in hot and humid conditions for cooling and dehumidifying the supply air flow.

13. The system for controlling the energy balance according to any one of claims 1-11, **characterized in that** the system is used for heating the supply air flow to a suitable level when the outdoor air is above or below 0°C.

## Patentansprüche

1. System zur Steuerung der Energiebilanz eines Gebäudes, umfassend einen Abluftkanal (1) vom Gebäude zum Steuersystem, einen Abflusskanal (2) vom Steuersystem, einen Zuflusskanal (3) zum Steuersystem, einen Zuluftkanal (4) vom Steuersystem zum Gebäude, und einen mit Flüssigkeit gefüllten Wärmespeichertank (5), wobei das Steuersystem einen Kompressor (6) mit einem Kompressorkreislauf umfasst, der mit dem Wärmespeichertank verbindbar ist, wobei der Kompressorkreislauf einen ersten Wärmetauscher (7) umfasst, der zwischen dem Abluftkanal (1) und dem Abflusskanal (2) angeordnet ist, und einen zweiten Wärmetauscher (8), der zwischen dem Zuflusskanal (3) und dem Zuluftkanal (4) angeordnet ist, und eine Wärmeübertragungsvorrichtung (9) im Abluftstrom zur Übertragung von Wärme zum Zuluftstrom aus dem Abluftstrom,
**dadurch gekennzeichnet, dass**
die Wärmeübertragungsvorrichtung (9) im Abluftstrom stromabwärts vom Wärmetauscher (7) und im Zuluftstrom stromaufwärts vom Wärmetauscher (8) angeordnet ist,
wobei ein zusätzlicher Heizer (10) in dem Zuluftkanal (4) stromabwärts vom zweiten Wärmetauscher (8) des Kompressorkreislaufs angeordnet ist, um die Temperatur des Zuluftstroms, der zu dem Grundstück gefördert werden soll, einzustellen.

2. System zur Steuerung der Energiebilanz nach Anspruch 1, **dadurch gekennzeichnet, dass** die Wärmeübertragungsvorrichtung (9) eine Rotations-Wärmeübertragungsvorrichtung ist.

3. System zur Steuerung der Energiebilanz nach Anspruch 1, **dadurch gekennzeichnet, dass** die Wärmeübertragungsvorrichtung (9) eine Wärmeübertragungsvorrichtung ist, die Flüssigkeit, wie z.B. Glykol, als Wärmeträgermedium verwendet.

4. System zur Steuerung der Energiebilanz nach einem der Ansprüche 1 bis 3, **dadurch gekennzeichnet, dass** das System einen Umluftregler (11) zum Öffnen des Abluftkanals (1) direkt zum Zuluftkanal (4) und zum Umwälzen der Luft in dem Gebäude umfasst, um den Kompressor (6) und die Wärmetauscher (7, 8) zu umgehen.

5. System zur Steuerung der Energiebilanz nach Anspruch 4, **dadurch gekennzeichnet, dass** der Umluftregler (11) mit einem im Umluftstrom angeordneten und zur Steuerung des Umluftreglers angeordneten CO₂-Sensor (12) verbunden ist.

6. System zur Steuerung der Energiebilanz nach einem der Ansprüche 1 bis 5, **dadurch gekennzeichnet, dass** der zusätzliche Heizer (10) mit dem Wärmespeichertank (5) in Wärmeübertragungsverbindung steht, um dem Wärmespeichertank (5) zusätzliche Wärme zu entziehen, die für den Luftstrom vom Wärmespeichertank benötigt wird.

7. System zur Steuerung der Energiebilanz nach Anspruch 6, **dadurch gekennzeichnet, dass** in dem zusätzlichen Heizer ein elektrischer Widerstand (17) vorgesehen ist.

8. System zur Steuerung der Energiebilanz nach einem der Ansprüche 1 bis 7, **dadurch gekennzeichnet, dass** in Verbindung mit dem Abluftkanal (1) und dem Zuflusskanal (3) Luftfilter (13) zur Reinigung der Luftströme vor dem Einströmen in das Steuersystem vorgesehen sind.

9. System zur Steuerung der Energiebilanz nach einem der Ansprüche 1 bis 8, **dadurch gekennzeichnet, dass** Gebläse (14) in Verbindung mit dem Abflusskanal (2) und dem Zuluftkanal (4) zur Erzeugung der Luftströme vorgesehen sind.

10. System zur Steuerung der Energiebilanz nach einem der Ansprüche 1 bis 9, **dadurch gekennzeichnet, dass** der Wärmespeichertank (5) mindestens eine Trennwand (15) aufweist, die horizontal und teilweise offen ist, um die vertikalen Strömungen im Wärmespeichertank einzuschränken.

11. System zur Steuerung der Energiebilanz nach einem der Ansprüche 1 bis 10, **dadurch gekennzeichnet, dass** in dem Wärmespeichertank (5) ein elektrischer Widerstand (16) vorgesehen ist, um seine Temperatur über einer vorbestimmten Temperatur zu halten.

12. System zur Steuerung der Energiebilanz nach einem der Ansprüche 1 bis 11, **dadurch gekennzeichnet, dass** das System unter heißen und feuchten Bedingungen zur Kühlung und Entfeuchtung des Zuluftstroms einsetzbar ist.

13. System zur Steuerung der Energiebilanz nach einem der Ansprüche 1 bis 11, **dadurch gekennzeichnet, dass** das System zur Erwärmung des Zuluftstroms auf ein geeignetes Niveau einsetzbar ist, wenn die Außenluft über oder unter 0 °C liegt.

## Revendications

1. Système pour commander le bilan énergétique d'une propriété, comprenant un conduit d'évacuation d'air (1) de la propriété au système de commande, un conduit de sortie (2) partant du système de commande, un conduit d'entrée (3) menant au système de commande, un conduit d'alimentation en air (4) du système de commande à la propriété, et un réservoir de stockage de chaleur (5) rempli de liquide, dans lequel le système de commande comprend un compresseur (6) avec un circuit de compresseur pouvant être relié au réservoir de stockage de chaleur, le circuit de compresseur incluant un premier échangeur de chaleur (7) disposé entre le conduit d'évacuation d'air (1) et le conduit de sortie (2) et un second échangeur de chaleur (8) disposé entre le conduit d'entrée (3) et le conduit d'alimentation en air (4), et
un dispositif de transfert de chaleur (9) dans le flux d'air d'évacuation pour transférer de la chaleur vers le flux d'air d'alimentation à partir du flux d'air d'évacuation, **caractérisé en ce que**
le dispositif de transfert de chaleur (9) dans le flux d'air d'évacuation est disposé en aval de l'échangeur de chaleur (7) et dans le flux d'air d'alimentation en amont de l'échangeur de chaleur (8),
un dispositif de chauffage additionnel (10) est disposé dans le conduit d'alimentation en air (4) en aval du second échangeur de chaleur (8) du circuit de compresseur pour ajuster la température du flux d'air d'alimentation à acheminer à la propriété.

2. Système pour commander le bilan énergétique selon la revendication 1, **caractérisé en ce que** le dispositif de transfert de chaleur (9) est un dispositif de transfert de chaleur rotatif.

3. Système pour commander le bilan énergétique selon la revendication 1, **caractérisé en ce que** le dispositif de transfert de chaleur (9) est un dispositif de transfert de chaleur qui utilise un liquide, tel que le glycol, en tant que milieu de transfert de chaleur.

4. Système pour commander le bilan énergétique selon l'une quelconque des revendications 1 à 3, **caractérisé en ce que** le système comprend un régulateur de circulation d'air (11) pour faire déboucher le conduit d'évacuation d'air (1) directement dans le conduit d'alimentation en air (4) et faire circuler l'air dans la propriété de manière à contourner le compresseur (6) et les échangeurs de chaleur (7, 8).

5. Système pour commander le bilan énergétique selon la revendication 4, **caractérisé en ce que** le régulateur de circulation d'air (11) est relié à un capteur de CO₂ (12) disposé dans le flux d'air de circulation et agencé pour commander le régulateur de circulation d'air.

6. Système pour commander le bilan énergétique selon l'une quelconque des revendications 1 à 5, **caractérisé en ce que** le dispositif de chauffage additionnel (10) est en communication de transfert de chaleur avec le réservoir de stockage de chaleur (5) pour extraire de la chaleur additionnelle requise pour le flux d'air en provenance du réservoir de stockage de chaleur.

7. Système pour commander le bilan énergétique selon la revendication 6, **caractérisé en ce qu'**une résistance électrique (17) est fournie dans le dispositif de chauffage additionnel.

8. Système pour commander le bilan énergétique selon l'une quelconque des revendications 1 à 7, **caractérisé en ce que** des filtres à air (13) sont disposés en liaison avec le conduit d'évacuation d'air (1) et le conduit d'entrée (3) pour purifier les flux d'air avant leur écoulement vers le système de commande.

9. Système pour commander le bilan énergétique selon l'une quelconque des revendications 1 à 8, **caractérisé en ce que** des soufflantes (14) sont disposées en liaison avec le conduit de sortie (2) et le conduit d'alimentation en air (4) pour créer les flux d'air.

10. Système pour commander le bilan énergétique selon l'une quelconque des revendications 1 à 9, **caractérisé en ce que** le réservoir de stockage de chaleur (5) comprend au moins une paroi de séparation (15) qui est horizontale et partiellement ouverte pour limiter les flux verticaux dans le réservoir de stockage de chaleur.

11. Système pour commander le bilan énergétique selon l'une quelconque des revendications 1 à 10, **caractérisé en ce que** la résistance électrique (16) est fournie dans le réservoir de stockage de chaleur (5) pour garder sa température au-dessus d'une température prédéterminée.

12. Système pour commander le bilan énergétique selon l'une quelconque des revendications 1 à 11, **caractérisé en ce que** le système est utilisé dans des conditions chaudes et humides pour refroidir et déshumidifier le flux d'air d'alimentation.

13. Système pour commander le bilan énergétique selon l'une quelconque des revendications 1 à 11, **caractérisé en ce que** le système est utilisé pour chauffer le flux d'air d'alimentation jusqu'à un niveau approprié lorsque l'air extérieur est au-dessus ou au-dessous de 0 °C.
